(19) Europäisches Patentamt
European Patent Office
Office européen des brevets

(11) **EP 0 554 192 B1**

(12) **FASCICULE DE BREVET EUROPEEN**

(45) Date de publication et mention
de la délivrance du brevet:
**17.09.1997 Bulletin 1997/38**

(51) Int Cl.6: **H04M 19/04**

(21) Numéro de dépôt: **93420033.8**

(22) Date de dépôt: **25.01.1993**

(54) **Régulateur de puissance pour un haut-parleur de poste de téléphone**

Leistungsregler für einen Lautsprecher einer Telefoneinheit

Power regulator for the loudspeaker of a telephone unit

(84) Etats contractants désignés:
**DE FR GB IT**

(30) Priorité: **29.01.1992 FR 9201243**

(43) Date de publication de la demande:
**04.08.1993 Bulletin 1993/31**

(73) Titulaire: **SGS-THOMSON MICROELECTRONICS S.A.**
**94250 Gentilly (FR)**

(72) Inventeur: **Arnaud, Thierry,**
**c/o Michel de Beaumont**
**F-38000 Grenoble (FR)**

(74) Mandataire: **de Beaumont, Michel**
**1bis, rue Champollion**
**38000 Grenoble (FR)**

(56) Documents cités:
**DE-A- 3 014 468**          **DE-A- 3 340 808**
**DE-A- 3 911 498**

## Description

La présente invention concerne les postes de téléphone équipés d'un haut-parleur de signal d'écoute également susceptible de servir de sonnerie, et en particulier un dispositif de régulation de la puissance fournie au haut-parleur pendant une sonnerie pour que la puissance sonore soit maximale en fonction de la puissance disponible sur la ligne téléphonique.

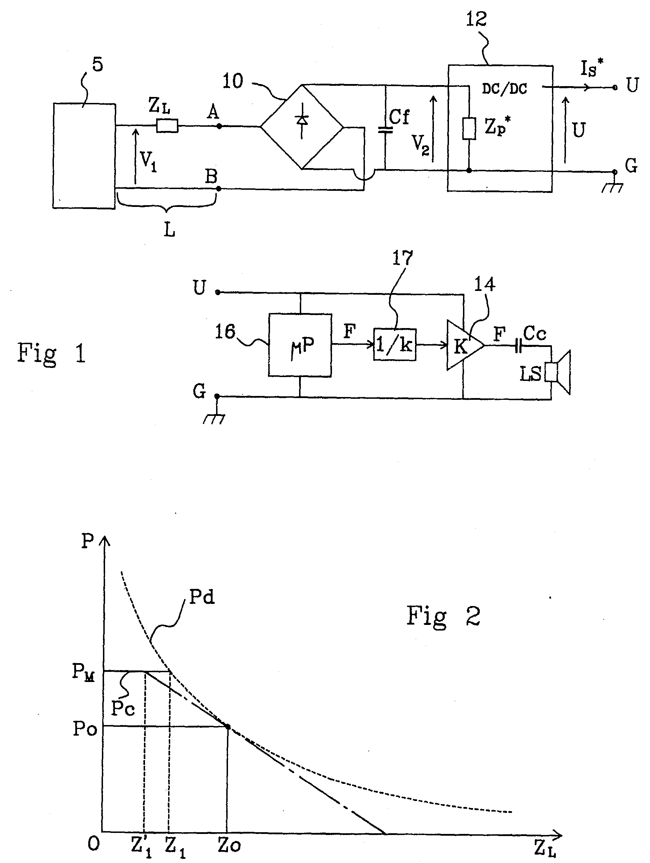

La figure 1 illustre schématiquement et partiellement certains éléments d'une installation téléphonique classique. Un central téléphonique 5 est relié à des bornes A et B d'un poste de téléphone par l'intermédiaire d'une ligne bifilaire L d'impédance $Z_L$. Les bornes A et B sont connectées à l'entrée d'un pont redresseur 10 qui fournit une tension $V_2$. Cette tension $V_2$ est filtrée par une capacité Cf et appliquée à l'entrée d'un convertisseur continu-continu (DC/DC) 12 qui délivre sur une borne U une tension stabilisée U. L'entrée et la sortie du convertisseur 12 ont une masse commune G. La tension U, généralement de l'ordre de 5 volts, est destinée à alimenter divers circuits du poste de téléphone et notamment le circuit de sonnerie. On a représenté à l'entrée du convertisseur 12 une impédance apparente Zp* égale à l'impédance moyenne du circuit de sonnerie, ramenée à l'entrée du convertisseur 12.

Le circuit de sonnerie comprend un amplificateur 14 alimenté par la tension U et excitant un haut-parleur LS à travers une capacité de couplage Cc. Cet amplificateur 14 a un gain K supérieur à 1 car il sert, en dehors des périodes de sonnerie, à restituer sur le haut-parleur LS un signal de parole, de faible niveau, avec une puissance suffisante.

Un microprocesseur 16 est également alimenté par la tension U. Lorsqu'un signal de sonnerie est détecté sur la ligne L, ce microprocesseur 16 fournit un signal carré F dont la fréquence est modulée pour créer une mélodie de sonnerie à reproduire par le haut-parleur LS. L'amplitude crête à crête du signal F est égale à U. Pour ne pas saturer l'amplificateur 14, le signal F est divisé par K dans un atténuateur 17 avant d'être appliqué à l'amplificateur. Ainsi, on retrouve en sortie de l'amplificateur 14 un signal pratiquement égal au signal F. Grâce à la capacité de couplage Cc, la tension aux bornes du haut-parleur LS est une tension carrée oscillant entre les valeurs -U/2 et U/2. Dans ces conditions, la puissance fournie au haut-parleur est égale à une valeur maximale $P_M$.

Le signal de sonnerie fourni par le central 5 sur la ligne téléphonique est supposé suffire à l'alimentation du circuit de sonnerie. Ce signal est une tension alternative de valeur efficace $V_1$ variable autour d'une valeur nominale, de 80 volts en France.

Plus l'impédance de ligne $Z_L$ est élevée (plus la ligne L est longue) et plus la valeur $V_1$ est faible, moins on dispose de puissance pour alimenter le circuit de sonnerie. Si l'on suppose que le convertisseur 12 est parfait, la puissance Pc consommée par le circuit de sonnerie est égale à la puissance dissipée dans l'impédance Zp*. Cette puissance consommée peut être rendue maximale en choisissant convenablement l'impédance Zp*, à savoir Zp*=$Z_L$. On définit cette puissance maximale comme la puissance disponible Pd qui s'exprime par :

$$Pd = \frac{V_1^2}{4Z_L} \qquad (1)$$

On supposera dans la suite de la description, pour simplifier, que les circuits qui consomment toute la puissance (Pc) sont le haut-parleur et l'amplificateur.

La figure 2 illustre par une courbe en pointillés la variation de la puissance disponible Pd en fonction de l'impédance de ligne $Z_L$. On a représenté en trait plein la puissance consommée Pc. Cette puissance consommée Pc est constante et égale à la valeur maximale $P_M$ pour des valeurs de l'impédance $Z_L$ comprises entre 0 et une impédance $Z_1$ où la puissance disponible Pd est égale à la puissance $P_M$. La puissance Pc est constante dans cette plage car le circuit de sonnerie présente une impédance constante alimentée sous une tension constante U. Lorsque l'impédance de ligne $Z_L$ devient supérieure à $Z_1$, la puissance disponible Pd devient inférieure à la puissance maximale $P_M$ que sollicite toujours le circuit de sonnerie. Alors, le convertisseur 12 n'est plus convenablement alimenté, sa tension de sortie U chute et les circuits de sonnerie fonctionnent mal ou ne peuvent plus fonctionner.

Pour éviter que la tension U chute lorsque l'impédance $Z_L$ devient supérieure à $Z_1$, on a proposé dans l'art antérieur que l'amplificateur 14 ait un gain K variable. Ce gain K est régulé pour diminuer la puissance dissipée dans le haut-parleur lorsque la puissance consommée Pc s'approche de la puissance disponible Pd de sorte que cette puissance consommée Pc reste inférieure à la puissance disponible Pd.

En pratique, on régule le gain K proportionnellement à la tension d'entrée $V_2$ qui varie dans le même sens que la puissance disponible Pd. On ajuste le coefficient de proportionnalité entre le gain K et la tension $V_2$ pour que la puissance consommée Pc soit égale à la puissance disponible Pd dans des conditions nominales, à savoir lorsque l'impédance de ligne $Z_L$ atteint une valeur nominale $Z_0$ (2000 ohms en France). La puissance disponible Pd dans les conditions nominales est notée $P_0$. Avec cette configuration, lorsque l'impédance $Z_L$ varie autour de $Z_0$, la puissance consommée Pc varie linéairement, comme cela est représenté en trait mixte, selon la tangente à la courbe Pd au point ($Z_0$,$P_0$) et reste inférieure à la puissance disponible Pd. Lorsque l'impédance de ligne $Z_L$ atteint une valeur $Z_1$' inférieure à la valeur $Z_1$, le gain K atteint sa valeur nominale où l'amplitude crête à crête de la tension aux bornes du haut-parleur est égale à la valeur U de la tension d'alimentation. A ce moment, même si le gain K augmente davantage, la tension fournie au haut parleur ne peut plus augmenter et la puissance consommée reste égale à la puissance maximale $P_M$.

Toutefois, un amplificateur alimenté par une tension U et fournissant à une charge une tension rectangulaire d'amplitude inférieure à U présente un rendement inférieur à 1. Plus l'impédance $Z_L$ devient grande par rapport à $Z_1'$, plus le rendement diminue et plus l'amplificateur 14 dissipe de la puissance au détriment du haut-parleur. Ainsi, pour des lignes dont l'impédance approche de la valeur maximale tolérée (3 500 ohms en France), la puissance fournie au haut-parleur peut être insuffisante bien que la puissance consommée Pc soit non négligeable du fait de la dissipation dans l'amplificateur et non dans le haut-parleur.

Un objet de la présente invention est de prévoir un régulateur de puissance de sonnerie permettant de fournir une puissance acceptable à un haut-parleur lorsque l'impédance d'une ligne téléphonique est particulièrement élevée.

La présente invention atteint cet objet en fournissant au haut-parleur des impulsions d'amplitude constante et égale à la tension d'alimentation du circuit de sonnerie, la largeur de ces impulsions étant modulée pour faire varier la puissance consommée par le haut-parleur en fonction de la puissance disponible sur la ligne téléphonique.

Les impulsions devant se produire à une fréquence variable pour produire une mélodie, un aspect de la présente invention est de prévoir un modulateur de largeur d'impulsion fournissant des impulsions à fréquence variable.

La présente invention vise plus particulièrement un dispositif d'alimentation d'une charge d'impédance fixe par un signal de fréquence F variable à partir d'une ligne susceptible de délivrer une puissance disponible. Ce dispositif comprend un modulateur de largeur d'impulsion fonctionnant à la fréquence F et alimentant la charge par des impulsions dont la largeur varie dans le même sens que la puissance disponible.

Selon un mode de réalisation de la présente invention, ladite ligne est reliée à l'entrée d'un convertisseur continu-continu qui fournit une tension constante d'alimentation pour la charge.

Selon un mode de réalisation de la présente invention, le modulateur de largeur d'impulsion comprend : un générateur de signal triangulaire de fréquence F et d'amplitude constante ; un comparateur à fenêtre indiquant si l'amplitude du signal triangulaire est comprise ou non entre des limites supérieure et inférieure déterminées par un signal de commande variant dans le même sens que ladite puissance disponible ; et un interrupteur piloté par le comparateur à fenêtre, une borne de cet interrupteur recevant le signal rectangulaire de fréquence F et l'autre borne constituant la sortie du modulateur de largeur d'impulsion.

Selon un mode de réalisation de la présente invention, le générateur de signal triangulaire comprend une source de courant de charge et une source de courant de décharge commutées alternativement à la fréquence F sur une capacité.

Selon un mode de réalisation de la présente invention, la valeur commune des courants de charge et de décharge est proportionnelle à la fréquence F.

Selon un mode de réalisation de la présente invention, les sources de courant de charge et de décharge sont commutées par un microprocesseur fournissant également une donnée numérique représentative de la fréquence F, cette donnée étant appliquée à un convertisseur numérique-analogique fournissant un courant qui fixe la valeur des courants de charge et de décharge.

Selon un mode de réalisation de la présente invention, les sources de courant de charge et de décharge comprennent : un premier miroir de courant recopiant sur deux sorties le courant fourni par le convertisseur numérique/analogique, une première sortie étant reliée à une borne de ladite capacité ; un miroir doubleur de courant dont une entrée est reliée à la deuxième sortie du premier miroir et dont une sortie est reliée à ladite borne de la capacité ; et un interrupteur animé à la fréquence F et court-circuitant l'entrée du miroir doubleur afin d'annuler le courant de sortie de ce dernier.

Selon un mode de réalisation de la présente invention, le signal de commande est un courant proportionnel à une tension disponible sur ladite ligne, ce courant étant amené à traverser des première et deuxième résistances, les tensions aux bornes de ces résistances fixant respectivement les limites supérieure et inférieure de la fenêtre du comparateur à fenêtre de manière que, lorsque l'impédance de ligne est égale à une valeur nominale, la puissance consommée sur la ligne soit égale à la puissance alors disponible.

Selon un mode de réalisation de la présente invention, le signal de fréquence F correspond à une mélodie de sonnerie de téléphone, ladite charge comprenant un amplificateur relié à un haut-parleur.

Selon un mode de réalisation de la présente invention, ladite ligne est une ligne téléphonique, la tension disponible étant établie par un signal de sonnerie véhiculé sur la ligne téléphonique.

Ces objets, caractéristiques et avantages ainsi que d'autres de la présente invention seront exposés en détail dans la description suivante de modes de réalisation particuliers faite en relation avec les figures jointes parmi lesquelles :

la figure 1, précédemment décrite, illustre partiellement une architecture de poste de téléphone classique ;
la figure 2 illustre des courbes de variation de puissance consommée et de puissance disponible en fonction de l'impédance de ligne ;
les figures 3A et 3B représentent respectivement les courbes de variation d'une tension fournie à un haut-parleur par un régulateur de puissance classique et d'une tension fournie par un régulateur selon la présente invention ;

la figure 4 illustre sous forme de blocs une architecture de poste téléphonique incorporant un dispositif de régulation de puissance selon la présente invention ;

la figure 5 illustre un mode de réalisation d'un dispositif de régulation selon la présente invention ;

la figure 6 représente des signaux en divers noeuds du dispositif de régulation de la figure 5 ; et

la figure 7 illustre de façon plus détaillée un mode de réalisation d'un élément du dispositif de régulation de la figure 5 permettant de générer un signal triangulaire.

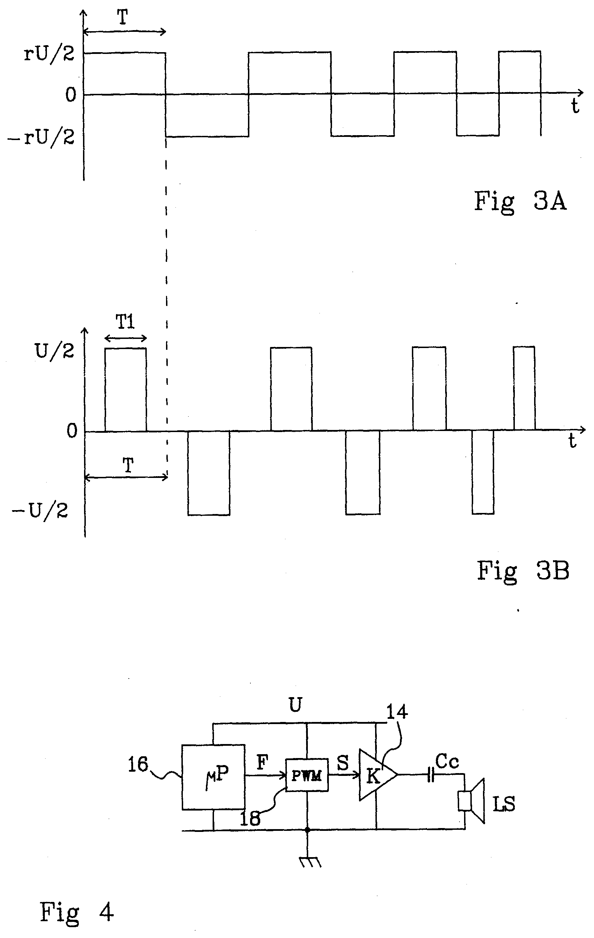

Comme le représente la figure 3A, si l'impédance de ligne est supérieure à l'impédance $Z_1'$ définie précédemment en relation avec la figure 2, un régulateur classique à amplificateur à gain variable alimenté par une tension U, tel que celui de la figure 1, fournit à un haut-parleur LS un signal carré de demi-période T et de valeurs extrêmes $rU/2$ et $-rU/2$, où r est un coefficient inférieur à 1 qui dépend de la tension disponible $V_2$. On a représenté ce signal avec une fréquence variable pour produire diverses tonalités sonores.

Dans ce cas, la puissance P fournie au haut-parleur vaut :

$$P = \frac{r^2 U^2}{4 Z_{LS}},$$

$Z_{LS}$ désignant l'impédance du haut-parleur ; alors que la puissance consommée Pc vaut :

$$Pc = \frac{r U^2}{4 Z_{LS}}.$$

Ainsi, la puissance fournie au haut-parleur vaut $P = rPc$, et est d'autant plus petite par rapport à la puissance dissipée dans l'amplificateur que le facteur r, qui varie dans le même sens que la puissance disponible Pd, est petit. Lorsque $r=1$, la puissance P est égale à sa valeur maximale $P_M$.

Selon l'invention, pour adapter la puissance consommée Pc, au lieu de modifier l'amplitude de la tension fournie au haut-parleur, on modifie la durée des alternances de cette tension. Comme le représente la figure 3B, pour une période de durée 2T, au lieu de deux alternances de durée T, on applique au haut-parleur des portions d'alternances de largeur $T_1$. Cette solution permet de fournir pratiquement toute la puissance consommée (Pc) à la charge (le haut-parleur).

Pour une valeur donnée de l'impédance $Z_L$ et donc de la puissance disponible Pd, le rapport $T_1/T$ est constant et de préférence aussi proche que possible de $Pd/P_M$. La puissance moyenne P fournie au haut-parleur vaut alors $P = P_M T_1/T = Pd$. Ainsi, lorsque la puissance disponible Pd est inférieure à la puissance maximale $P_M$, la puissance fournie au haut-parleur est égale à la puissance disponible. Lorsque la puissance disponible est supérieure à la puissance maximale $P_M$, la durée $T_1$ est égale à sa valeur maximale T et la puissance fournie au haut-parleur est constante et égale à la valeur maximale $P_M$.

Selon un aspect de l'invention, conduisant à une réalisation particulièrement simple, le rapport $T_1/T$ est régulé en fonction de la tension $V_2$ présente à l'entrée du convertisseur 12, et de manière à avoir $Pc=Pd=P_0$ dans les conditions nominales. Avec ce choix, lorsque $Z_L$ varie autour $Z_0$, la puissance consommée Pc, et donc la puissance P fournie au haut-parleur, varie selon la tangente à la courbe Pd de la figure 2 en ($Z_0$, $P_0$). En outre, en choisissant de faire varier $T_1/T$ en fonction de $V_2$, on tient également compte des variations de la puissance disponible Pd en fonction de la tension $V_1$ fournie par le central.

La figure 4 représente un dispositif de régulation 18 selon la présente invention disposé entre le microprocesseur 16 et l'amplificateur 14 de la figure 1. Le gain K de l'amplificateur 14 est ici constant. Le dispositif 18 reçoit le signal carré F provenant du microprocesseur et délivre un signal S à l'amplificateur 14, présentant l'allure du signal de la figure 3B.

Le dispositif 18 est un modulateur de largeur d'impulsion présentant la particularité, selon l'invention, de pouvoir délivrer des impulsions à une fréquence variable.

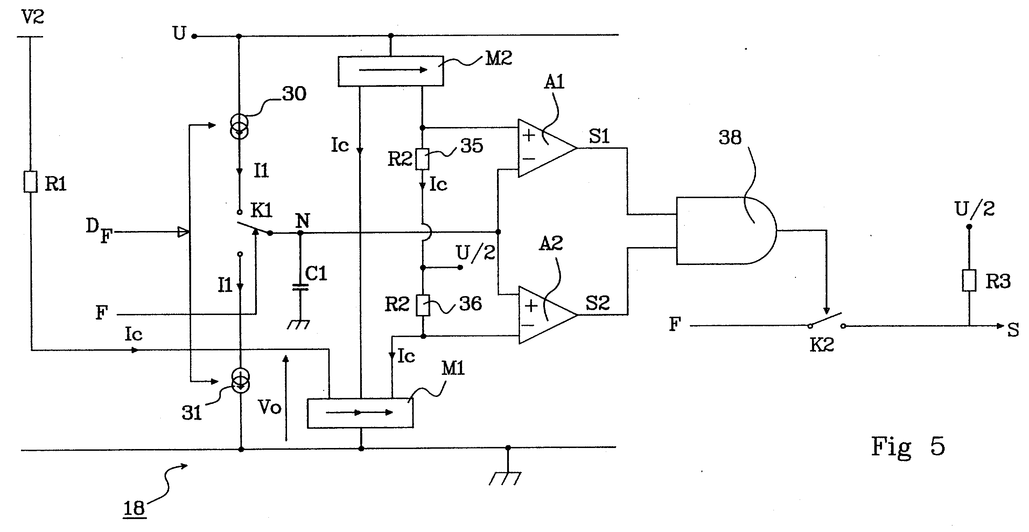

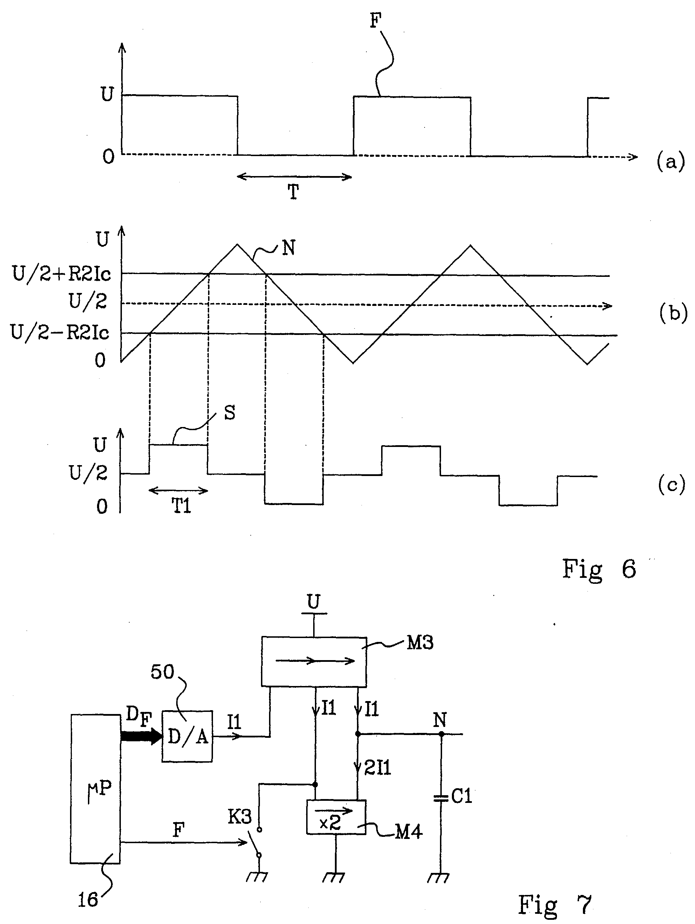

La figure 5 représente un schéma simplifié d'un mode de réalisation d'un tel modulateur de largeur d'impulsion 18. Dans la description de la figure 5, on se référera également à la figure 6 qui représente les allures de différents signaux apparaissant dans le modulateur 18.

Un interrupteur K1 est piloté par le signal carré F fourni par le microprocesseur 16. La courbe (a) de la figure 6 montre l'allure du signal F. L'interrupteur K1 commute alternativement une borne N d'une capacité $C_1$ sur une source de courant de charge 30 reliée à la tension U et sur une source de courant de décharge 31 reliée à la masse. Les courants de charge et de décharge de la capacité $C_1$ ont la même valeur $I_1$ déterminée par une donnée numérique $D_F$ fournie par le microprocesseur 16. La donnée numérique $D_F$ est proportionnelle à la fréquence du signal F, de sorte que la valeur 11 des courants de charge et de décharge soit également proportionnelle à cette fréquence. L'autre borne de la capacité $C_1$ est reliée à la masse.

Avec cette configuration, on obtient sur la borne N un signal triangulaire N à la fréquence du signal F et d'amplitude constante, tel que représenté par la courbe (b) de la figure 6. L'amplitude de ce signal triangulaire est déterminée par le facteur de proportionnalité entre la valeur $I_1$ et la fréquence du signal F, et par la valeur $C_1$ pour rester sensiblement constante. On supposera pour simplifier que l'amplitude du signal triangulaire reste égale à U.

L'entrée d'un miroir de courant M1 relié à la masse et à double sortie est reliée à la tension $V_2$ par l'intermédiaire d'une résistance $R_1$. Le courant d'entrée Ic de ce miroir de courant est donc :

$$Ic = \frac{V_2 - V_0}{R_1} \qquad (2)$$

où $R_1$ est la valeur de la résistance $R_1$ et $V_0$ une tension de référence choisie ou une tension de déchet (tension base-émetteur d'un transistor) constante présente entre l'entrée du miroir M1 et la masse.

On remarque que le courant Ic est proportionnel à la tension $V_2$. Ci-après on verra que le rapport $T_1/T$ est proportionnel au courant Ic. Comme on l'a précédemment mentionné, ce choix mène à une réalisation particulièrement simple du modulateur 18. Toutefois, pour parfaire l'adaptation de la puissance consommée, on peut réguler le rapport $T_1/T$ proportionnellement à un polynôme du second degré en Ic, ce qui permet d'obtenir un rapport $T_1/T$ proportionnel à la puissance disponible Pd. L'homme du métier peut facilement déterminer ce polynôme et réaliser des circuits adéquats, par exemple à l'aide d'un multiplieur de courant, pour obtenir une telle régulation de $T_1/T$.

Une première sortie du miroir M1 est connectée à l'entrée d'un miroir M2 relié à la tension U. La sortie du miroir M2 est reliée à la deuxième sortie du miroir M1 par l'intermédiaire de deux résistances en série 35 et 36 de valeur $R_2$. La tension au point de connexion entre ces résistances 35 et 36 est fixée à une valeur de référence U/2. La borne N est reliée à l'entrée inverseuse d'un comparateur A1 et à l'entrée non-inverseuse d'un comparateur A2. L'entrée non-inverseuse du comparateur A1 est reliée à la sortie du miroir M2 et l'entrée inverseuse du comparateur A2 est reliée à la sortie du miroir M1. Les sorties respectives S1 et S2 des comparateurs A1 et A2 sont reliées à une porte ET 38 qui commande un dispositif symboliquement représenté par un interrupteur K2. Cet interrupteur transmet ou non le signal F vers la sortie S du dispositif de régulation 18. La sortie S est reliée à la tension U/2 par l'intermédiaire d'une résistance $R_3$, ce qui fixe la tension de sortie S à U/2 lorsque l'interrupteur K2 est ouvert.

Les comparateurs A1 et A2 et la porte ET 38 constituent un comparateur à fenêtre, les limites supérieure et inférieure de la fenêtre étant fixées respectivement à U/2 + $R_2$Ic et U/2 - $R_2$Ic par le courant Ic traversant les résistances 35 et 36. Cette fenêtre est reportée sur le diagramme (b) de la figure 6. Lorsque l'amplitude du signal triangulaire N est comprise dans la fenêtre, la sortie de la porte ET 38 est à l'état haut et lorsque l'amplitude du signal triangulaire est en dehors de la fenêtre, la porte ET 38 est à l'état bas. Comme le représente la courbe (c) de la figure 6, la tension de sortie S atteint l'une ou l'autre de ses valeurs extrêmes U et 0, lorsque l'amplitude du signal triangulaire N est comprise dans la fenêtre, et est égale à U/2 dans le cas contraire. La tension S est transmise au haut-parleur LS par l'amplificateur 14 et la capacité Cc. La tension aux bornes du haut haut-parleur présente alors les caractéristiques de la figure 3B.

On pourra prévoir une résistance, non représentée, disposée en série avec l'interrupteur K2 pour former avec la résistance $R_3$ un pont diviseur de rapport 1/K (K étant le gain de l'amplificateur 14). Ainsi, la tension S présentera une amplitude U/K et on évitera de saturer l'amplificateur 14 tout en fournissant une tension d'amplitude U au haut-parleur.

La valeur $T_1$ mentionnée en relation avec la figure 3B correspond à la durée de chaque passage du signal triangulaire N dans la fenêtre. Cette durée s'exprime par :

$$T_1 = \frac{2R_2 Ic}{U} T, \text{ ce qui entraîne } \frac{T_1}{T} = \frac{2R_2 Ic}{U}. \qquad (3)$$

Comme le courant Ic est proportionnel à $V_2$ (expression (2)), on déduit de l'expression (3) ci-dessus que le rapport $T_1/T$ est également proportionnel à $V_2$. On choisit la valeur $R_1$ (la valeur R2 étant généralement fixe) pour que, dans les conditions nominales, la puissance consommée Pc soit égale à la puissance disponible Pd=$P_0$. On obtient alors une régulation de puissance selon la courbe en trait mixte de la figure 2, la puissance étant consommée dans le haut-parleur avec pratiquement aucune perte dans l'amplificateur associé qui fonctionne avec une amplitude de sortie maximale.

La figure 7 illustre un exemple de réalisation des sources de courant 30, 31 programmables par la donnée $D_F$ fournie par le microprocesseur 16. La donnée $D_F$ est fournie à un convertisseur numérique/analogique 50 qui délivre un courant $I_1$ à l'entrée d'un miroir de courant M3 relié à la tension U et à double sortie. Une première sortie du miroir M3 est connectée à l'entrée d'un miroir de courant doubleur M4 relié à la masse. La deuxième sortie du miroir M3 est reliée à la sortie du miroir M4 et à la borne N de la capacité $C_1$ de la figure 3. Un interrupteur K3 est commandé par le signal carré F fourni par le microprocesseur 16 et court-circuite l'entrée du miroir M4 vers la masse.

Avec cette configuration, lorsque l'interrupteur K3 est fermé, le miroir M4 est inhibé et le seul courant $I_1$ fourni par la deuxième sortie du miroir M3 charge la capacité $C_1$. Lorsque l'interrupteur K3 est ouvert, le miroir M4 est actif et draine un courant égal à $2I_1$, ce qui entraîne la décharge de la capacité $C_1$ par un courant égal à $I_1$.

De nombreuses variantes et modifications de la présente invention apparaîtront à l'homme de l'art notamment en ce qui concerne la réalisation des sources de courant programmables 30 et 31, et des divers interrupteurs. Par ailleurs, d'autres modes d'obtention d'un rapport de durée $T_1/T$ lié à la puissance disponible sur une ligne pourront être envisagés. Par exemple, dans le cas où l'on souhaite que ce rapport soit proportionnel à $V_2$, on pourra fournir au microprocesseur 16 des signaux indicatifs de ce paramètre et programmer ce microprocesseur pour qu'il fournisse les créneaux souhaités.

## Revendications

1. Dispositif d'alimentation d'une charge (LS) d'impédance fixe par un signal carré de fréquence F variable fourni par un circuit (16) à partir d'une ligne (L) susceptible de délivrer une puissance disponible (Pd) variable, caractérisé en ce qu'il comprend un modulateur de largeur d'impulsion (18) synchronisé sur le signal de fréquence F et alimentant la charge par des impulsions dont la largeur (T1) varie dans le même sens que la puissance disponible.

2. Dispositif selon la revendication 1, caractérisé en ce que ladite ligne est reliée à l'entrée d'un convertisseur continu-continu (12) qui fournit une tension constante (U) d'alimentation pour la charge (LS).

3. Dispositif selon la revendication 1, caractérisé en ce que le modulateur de largeur d'impulsion (18) comprend :

   - un générateur de signal triangulaire (N) de fréquence F et d'amplitude constante ;
   - un comparateur à fenêtre (A1, A2, 38) indiquant si l'amplitude du signal triangulaire (N) est comprise ou non entre des limites supérieure et inférieure déterminées par un signal de commande (Ic) variant dans le même sens que ladite puissance disponible (Pd) ; et
   - un moyen interrupteur (K2) piloté par le comparateur à fenêtre, une borne de ce moyen interrupteur recevant le signal rectangulaire de fréquence F et l'autre borne constituant la sortie (S) du modulateur de largeur d'impulsion.

4. Dispositif selon la revendication 3, caractérisé en ce que le générateur de signal triangulaire comprend une source de courant de charge (30) et une source de courant de décharge (31) commutées alternativement à la fréquence F sur une capacité ($C_1$).

5. Dispositif selon la revendication 4, caractérisé en ce que la valeur commune (I1) des courants de charge et de décharge est proportionnelle à la fréquence F.

6. Dispositif selon la revendication 5, caractérisé en ce que les sources de courant de charge et de décharge (30, 31) sont commutées par un microprocesseur (16) fournissant également une donnée numérique ($D_F$) représentative de la fréquence F, cette donnée étant appliquée à un convertisseur numérique-analogique (50) fournissant un courant ($I_1$) qui fixe la valeur ($I_1$) des courants de charge et de décharge.

7. Dispositif selon la revendication 6, caractérisé en ce que les sources de courant de charge et de décharge (30, 31) comprennent :

   - un premier miroir de courant (M3) recopiant sur deux sorties le courant ($I_1$) fourni par le convertisseur numérique/analogique (50), une première sortie étant reliée à une borne (N) de ladite capacité ($C_1$) ;
   - un miroir doubleur de courant (M4) dont une entrée est reliée à la deuxième sortie du premier miroir (M3) et dont une sortie est reliée à ladite borne (N) de la capacité ($C_1$) ; et
   - un interrupteur (K3) animé à la fréquence F et court-circuitant l'entrée du miroir doubleur (M4) afin d'annuler le courant de sortie de ce dernier.

8. Dispositif selon la revendication 3, caractérisé en ce que le signal de commande est un courant (Ic) proportionnel à une tension ($V_2$) disponible sur ladite ligne (L), ce courant étant amené à traverser des première et deuxième résistances (35, 36), les tensions aux bornes de ces résistances fixant respectivement les limites supérieure et inférieure de la fenêtre du comparateur à fenêtre (A1, A2, 38) de manière que, lorsque l'impédance de ligne ($Z_L$) est égale à une valeur nominale ($Z_0$), la puissance consommée (Pc) sur la ligne soit égale à la puissance alors disponible ($P_0$).

9. Dispositif selon l'une quelconque des revendications 1 à 8, caractérisé en ce que le signal de fréquence F correspond à une mélodie de sonnerie de téléphone, ladite charge comprenant un amplificateur (14) relié à un haut-parleur (LS).

10. Dispositif selon la revendication 9, caractérisé en ce que ladite ligne est une ligne téléphonique, la tension disponible ($V_2$) étant établie par un signal de sonnerie véhiculé sur la ligne téléphonique.

## Patentansprüche

1. Vorrichtung zur Versorgung einer Last (LS) einer bestimmten Impedanz mit einem Rechtecksignal variabler Frequenz F, das aus einem Schaltkreis (16) über eine Leitung (L) geliefert wird, die zum Liefern einer verfügbaren variablen Leistung (Pd) geeignet ist, dadurch gekennzeichnet, daß sie einen Pulsbreitenmodulator (18) aufweist, welcher mit dem Signal der Frequenz F synchronisiert ist und die Last mit Impulsen versorgt, deren Breite (T1) gleichsinnig mit der verfügbaren Leistung variiert.

2. Vorrichtung nach Anspruch 1, dadurch gekennzeichnet, daß die Leitung am Eingang eines Gleichspannungswandlers (12) angeschlossen ist, der die Last (LS) mit einer konstanten Versorgungsspannung (U) versorgt.

3. Vorrichtung nach Anspruch 1, dadurch gekennzeichnet, daß der Pulsbreitenmodulator (18) aufweist:

- einen Generator (N) für Dreieckssignale mit der Frequenz F und konstanter Amplitude,
- einen Fensterkomparator (A1, A2, 38), der anzeigt, ob die Amplitude des Dreieckssignals (N) innerhalb des Intervalls zwischen einer oberen und einer unteren Grenze liegt, die von einem Steuersignal (Ic) bestimmt werden, das gleichsinnig mit der verfügbaren Leistung (Pd) variiert und
- einen Schalter (K2), der von dem Fensterkomparator gesteuert wird, wobei ein Anschluß dieses Schalters das Rechtecksignal der Frequenz F empfängt und der andere Anschluß den Ausgang (S) des Pulsbreitenmodulators bildet.

4. Vorrichtung nach Anspruch 3, dadurch gekennzeichnet, daß der Dreieckssignalgenerator eine Ladestromquelle (30) und eine Entladestromquelle (31) aufweist, die mit der Frequenz F an einen Kondensator (C1) alternativ angeschlossen werden.

5. Vorrichtung nach Anspruch 4, dadurch gekennzeichnet, daß der gemeinsame Wert (I1) von Lade- und Entladestrom der Frequenz F proportional ist.

6. Vorrichtung nach Anspruch 5, dadurch gekennzeichnet, daß die Lade- und Entladestromquellen (30, 31) von einem Mikroprozessor (16) geschaltet werden, der auch einen digitalen, für die Frequenz F repräsentativen Datenwert ($D_F$) liefert, wobei dieser Datenwert einem Digital-Analog-Wandler (50) eingegeben wird, der einen Strom (I1) liefert, der den Wert (I1) von Lade- und Entladestrom bestimmt.

7. Vorrichtung nach Anspruch 6, dadurch gekennzeichnet, daß die Lade- und Entladestromquellen (30, 31) enthalten:

- einen ersten Stromspiegel (M3), der den von dem Digital-Analog-Wandler (50) gelieferten Strom (I1) auf zwei Ausgänge dupliziert, wobei ein erster Ausgang an einem Anschluß (N) des Kondensators (C1) angeschlossen ist;
- einen Stromverdopplungsspiegel (M4), dessen einer Eingang an dem zweiten Ausgang des ersten Spiegels (M3) angeschlossen ist und dessen einer Ausgang an dem Anschluß (N) des Kondensators (C1) angeschlossen ist; und
- einen mit der Frequenz F betriebenen Schalter (K3), der den Eingang des Verdopplungsspiegels (M4) kurzschließt, um dessen Ausgangsstrom zu unterbrechen.

8. Vorrichtung nach Anspruch 3, dadurch gekennzeichnet, daß das Steuersignal ein zu einer auf der Leitung (L) verfügbaren Spannung (V2) proportionaler Strom (Ic) ist, wobei dieser Strom durch einen ersten und einen zweiten Widerstand (35, 36) fließt und die Spannungen an den Anschlüssen dieser Widerstände jeweils die obere und untere Grenze des Fensters des Komparatorfensters (A1, A2, 38) derart bestimmen, daß, wenn die Leitungsimpedanz ($Z_L$) gleich einem Nennwert ($Z_0$) ist, die auf der Leitung verbrauchte Leistung (Pc) gleich der dann verfügbaren Leistung ($P_0$) ist.

9. Vorrichtung nach einem der Ansprüche 1 bis 8, dadurch gekennzeichnet, daß das Signal der Frequenz F einer Melodie eines Telephonanrufsignals entspricht, und daß die Last einen Verstärker (14) enthält, der an einem Lautsprecher (LS) angeschlossen ist.

10. Vorrichtung nach Anspruch 9, dadurch gekennzeichnet, daß die Leitung eine Telephonleitung ist, wobei die verfügbare Spannung ($V_2$) durch ein Signal auf der Telephonleitung festgelegt wird.

**Claims**

1. A device for supplying a load (LS) having a fixed impedance with a squarewave signal having a variable frequency F provided by a circuit (16) from a line (L) capable of supplying a variable available power (Pd), characterized in that it comprises a pulse width modulator (18) synchronized on the signal having frequency F and supplying said load with pulses, the widths (T1) of which vary in the direction of the available power.

2. The device according to claim 1, characterized in that said line is connected to the input of a dc-to-dc converter (12) which provides a constant supply voltage (U) to said load (LS).

3. The device according to claim 1, characterized in that said pulse width modulator (18) comprises:

- a generator providing a triangular signal (N) having a frequency F and a constant amplitude;

- a window comparator (A1, A2, 38) indicating whether the amplitude of said triangular signal (N) falls within upper and lower limits determined by a control signal (Ic) varying in the direction of the available power (Pd); and
- a switch (K2) controlled by said window comparator, a terminal of said switch receiving the squarewave signal having frequency F and the other terminal forming the output (6) of said pulse width modulator.

4. The device according to claim 3, characterized in that said triangular signal generator includes a charge current source (30) and a discharge current source (31), alternatively connected at frequency F to a capacitor (C1).

5. The device according to claim 4, wherein the common value (I1) of said charge and discharge currents is proportional to frequency F.

6. The device according to claim 5, characterized in that said charge and discharge current sources (30, 31) are switched by a microprocessor (16) also providing a digital datum (DF) representative of said frequency F, said digital datum being applied to a digital-to-analog converter (50) providing a current (I1) which fixes the value (I1) of said charge and discharge currents.

7. The device according to claim 6, characterized in that said charge and discharge current sources (30, 31) include:

- a first current mirror (M3) copying on two outputs said current (I1) supplied by said digital-to-analog converter (50), a first output being connected to a terminal (N) of said capacitor (C1);
- a doubling current mirror (M4) having an input connected to the second output of said first mirror (M3) and an output connected to terminal (N) of said capacitor (C1); and
- a switch (K3) actuated at frequency F and shorting the input of said doubling mirror (M4) in order to cancel the output current thereof.

8. The device according to claim 3, characterized in that said control signal is a current (Ic) proportional to a voltage (V2) available on said line (L), said current being forced to flow through first and second resistors (35, 36), the voltages across said resistors respectively fixing the upper and lower limits of the window of said window comparator (A1, A2, 38) so that, when the line impedance (ZL) is equal to a nominal value (Z0), the power consumed (Pc) on the line is equal to the power then available (P0).

9. The device according to any of claims 1 to 8, characterized in that said signal having frequency F corresponds to a telephone ringing melody, said load comprising an amplifier (14) connected to a loudspeaker (LS).

10. The device according to claim 9, characterized in that said line is a telephone line, the available voltage (V2) being established by a ringing signal carried on said telephone line.

Fig 1

Fig 2

Fig 3A

Fig 3B

Fig 4

Fig 5

EP 0 554 192 B1

F

U

0

T

(a)

U

U/2+R2Ic

U/2

U/2−R2Ic

0

N

S

U

U/2

0

T1

(b)

(c)

Fig 6

U

M3

50

D_F

I1

I1

I1

N

MP

D/A

I1

2I1

C1

F

K3

×2

M4

16

Fig 7